# EUROPÄISCHE PATENTSCHRIFT

(11) **EP 2 620 199 B1**
(45) Veröffentlichungstag und Bekanntmachung des Hinweises auf die Patenterteilung: **30.12.2015**
(21) Anmeldenummer: 13150914.3
(22) Anmeldetag: 11.01.2013
(51) Int. Cl.: B01D 39/12, B01D 39/20

(54) **System zur Abtrennung von Chrom (VI) Verbindungen**
System for separation of chrome (VI) compounds
Système pour la séparation de composés chrome (VI) .

(30) Priorität: 27.01.2012 DE 102012001654
(43) Veröffentlichungstag der Anmeldung: 31.07.2013
(73) Patentinhaber: Vaillant GmbH, 42859 Remscheid (DE)
(72) Erfinder: Badenhop, Thomas, 51688 Wipperfürth (DE); Reinert, Andreas, 58455 Witten (DE)
(74) Vertreter: Hocker, Thomas

(56) Entgegenhaltungen:
- EP-A1- 0 940 166
- DE-A1-102007 045 337
- JP-A- 10 033 985
- JP-A- 50 079 499

## Beschreibung

Die Erfindung betrifft ein System, umfassend eine Energieerzeugungseinheit und eine Filter zur Abtrennung von Chrom(VI)-Verbindungen aus Abgasen dieser Energieerzeugungseinheit nach Anspruch 1.

In Energieerzeugungseinheiten wie z.B. dezentral eingesetzten Brennern, Stirlingmaschinen oder Brennstoffzellensystemen werden hochwarmfeste Edelstähle und Nickelbasislegierungen in brenngas-, luft- und insbesondere abgasführenden Bauteilen verwendet. Hochwarmfeste Edelstähle und Nickelbasislegierungen enthalten in großen Mengen Chrom, welcher eine schützende Oxiddeckschicht ausbildet, um so das Bauteil vor Hochtemperaturkorrosion zu schützen. Diese Deckschicht kann jedoch durch die Atmosphäre, z.B. durch einen erhöhten Wasserdampfpartialdruck angegriffen werden und Chromverbindungen können als Chromhydroxide aus dem Bauteil ausgetragen werden. Abhängig von der Temperatur, vom Sauerstoff- und Wasserdampfpartialdruck bilden sich dabei aus der schützenden Cr₂O₃-Deckschicht metastabile gasförmige Chrom(oxy-)hydroxide (Chromabdampfung). Auch durch zyklische thermische Beanspruchung kann es zu Mikrorissen in der schützenden Deckschicht kommen und Chromoxide können abplatzen und so ausgetragen werden. Zum einen geht die schützende Deckschicht folglich verloren. Zum anderen können humantoxische und wassergefährdende Chromverbindungen direkt oder mit dem Kondensat aus der Energieerzeugungseinheit ausgetragen werden.

Chromverbindungen können auch mit dem Brennstoff in das Rauchgas gelangen, z.B. können Kohle und biogene Brennstoffe größere Mengen Chrom enthalten. Während des Verbrennungsprozesses werden diese Chromverbindungen in Chromoxide umgesetzt. Dabei können Chrom(VI)-haltige Verbindungen entstehen.

Es ist zwar aus Kraftwerksprozessen bekannt, diese Chrom(VI)-Verbindungen in Wäschern (z.B. Amin-Wäsche) auszufällen und mit dem Waschwasser aus dem Rauchgas zu entfernen. Anschließend wird das Waschwasser mittels Anionen- und Kationenaustauschern von den Chromverbindungen gereinigt und dem Rauchgaswäscher wieder zugeführt. Naßchemische Verfahren erfordern in der Regel einen hohen apparativen Aufwand, weshalb diese Verfahren für den Einsatz in kleinen dezentralen Energieerzeugungsanlagen nur bedingt oder gar nicht eingesetzt werden können bzw. sich in diesen nicht kostentechnisch darstellen lassen.

Das Dokument Dokument DE 10 2007 045337 A1 beschreibt ein Verfahren zur Beseitigung von Chrom (VI)-Verbindungen bekannt, bei dem abfiltrierter Staub einer Wärmebehandlung bei 200-300 °C unterworfen wird.

Es ist daher Aufgabe der Erfindung, ein System mit einem apparativ einfachen, kompakten und kostengünstigen Filter zum Abtrennung von Chrom(VI)-Verbindungen aus Abgasen an Energieerzeugungsanlagen, insbesondere an kleinen dezentral verwendeten Energieerzeugungsanlagen wie Brennstoffzellen, Kraft-Wärme-Kopplungsanlagen mit z.B. Stirling-Motoren oder Brennern bereitzustellen.

Diese Aufgabe wird gemäß den Merkmalen des Anspruchs 1 gelöst. Vorteilhafte Ausgestaltungen ergeben sich durch die Merkmale der abhängigen Ansprüche. Die unabhängigen Ansprüche 15 und 16 beschreiben Verwendungen.

Erfindungsgemäß ist der Filter im Abgasweg vorgesehen und umfasst eine erste Filtereinheit mit einem sich im Strömungsweg des Abgases befindenden ersten Filterkörper. Diese erste Filtereinheit ist so im Abgasweg angeordnet, dass sich im Betrieb in der ersten Filtereinheit eine Temperatur von 180 °C bis 500 °C und bevorzugt von 300 °C bis 500 °C einstellt. Dieser Temperaturbereich begünstigt die Umwandlung von Chrom(VI)-Verbindungen zu Chrom(III)-Verbindungen thermodynamisch.

Der erste Filterkörper besteht aus einem Metallgewebe, einem Metallschaum oder einem Keramikschaum. Dies gewährleistet einerseits eine große wirksame Oberfläche und andererseits eine niedrige Strömungsgeschwindigkeit des zu filternden Abgases und damit eine lange Verweilzeit im Filter.

In einer Weiterbildung der Erfindung enthält der erste Filterkörper eine feste Säure. Durch die Säure wird die Reduktion der Chrom(VI)-Verbindung unterstützt und beschleunigt.

Bevorzugt wird als feste Säure eine Brönsted-Säure, eine Lewis-Säure oder Wolframoxid verwendet, welches besonders bevorzugt als Beschichtung auf einem Träger aus Zirkonium oder Zirkoniumoxid aufgetragen ist.

In einer Weiterbildung der Erfindung ist eine zweite Filtereinheit vorgesehen, die der ersten Filtereinheit im Abgasstrom nachgeschaltet ist. In der zweiten Filtereinheit werden die von der ersten Filtereinheit umgewandelten harmlosen Chrom(III)-Verbindungen wirksam abgetrennt. Auch hier begünstigt eine große spezifische Oberfläche eine Adsorption. Mittels eines basischen Materials lassen sich die Chrom(III)-Verbindungen und eventuell noch vorhandene Chrom(VI)-Verbindungen ausfällen bzw. nicht mehr flüchtige, feste Chromkomplexe bilden.

Bevorzugt besteht auch der zweite Filterkörper aus einem Metallgewebe, einem Metallschaum oder einem Keramikschaum. Dies gewährleistet einerseits eine große wirksame Oberfläche und andererseits eine niedrige Strömungsgeschwindigkeit des zu filternden Abgases und damit eine lange Verweilzeit im Filter. In einer Variante besteht der Filterkörper aus Aluminiumhexaaluminat.

Vorteilhaft ist, dass der zweite Filterkörper aus dem festen basischen Material Bariumoxid oder eine Beschichtung mit Bariumoxid besteht.

In einer Weiterbildung der Erfindung ist unterhalb der zweiten Filtereinheit ein Leerraum zur Aufnahme von Chromoxid-Abplatzungen aus der zweiten Filtereinheit vorgesehen. In diesem Leerraum können sich die Ableitungen sammeln und im Rahmen einer Wartung entfernt werden.

Eine vorteilhafte Gestaltung der Abgasführung sieht vor, dass die Gasströmung im Leerraum in eine Richtung entgegen der Schwerkraft umgeleitet wird, wodurch sich staubförmige Bestandteilen des Abgases absetzen und nicht mehr mit der Gasströmung ausgetragen werden können.

Bei der Energieerzeugungseinheit handelt es sich bevorzugt um eine Brennstoffzelle, ein Brenner oder eine Kraft-Wärme-Kopplungsanlage auf Basis einer Verbrennungskraftmaschine wie z.B. einer Stirlingmaschine, einem Verbrennungsmotor mit innerer Verbrennung oder einer Gasturbine, die jeweils dezentral in einem Wohngebäude oder Gewerbebetrieb etc. untergebracht sind.

In den Fällen, wo die Energieerzeugungseinheit über einen Abgaswärmeübertrager verfügt, ist der erfindungsgemäße Filter vorteilhafter Weise vor dem Abgaswärmeübertrager vorgesehen, um die benötigten Temperaturen im Filter sicherzustellen.

Die Erfindung wird nun anhand der Figuren detailliert erläutert. Hierbei zeigen

Es stellen dar:
Figur 1: eine erfindungsgemäße Energieerzeugungseinheit mit einem erfindungsgemäßen Filter
Figur 2: im Detail eine Ausführungsvariante des erfindungsgemäßen Filter

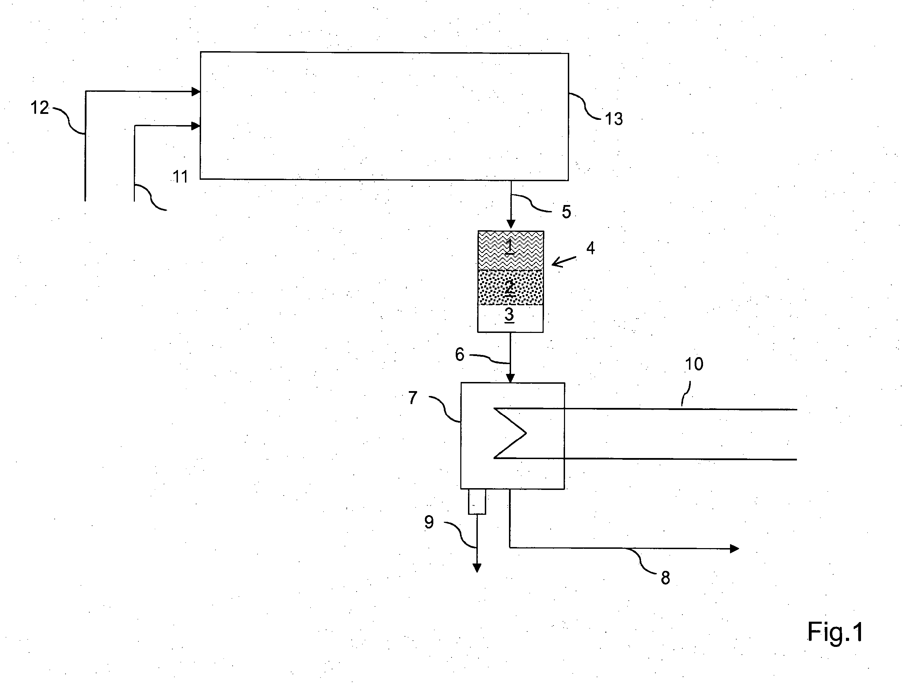

Figur 1 zeigt eine erfindungsgemäße Energieerzeugungseinheit 13 mit dem erfindungsgemäßen Filter 4. Bei der Energieerzeugungseinheit 13 handelt es sich um beispielsweise eine dezentrale Kraft-Wärme-Kopplungseinheit auf Basis einer Brennstoffzelle oder eines Stirlingmotors oder um einen Brenner. Über die Luftzufuhr 11 und die Brennstoffzufuhr 12 werden Luft und Brennstoff zugeführt. Im Falle einer Brennstoffzelle oder eines Stirlingmotors wird in der Energieerzeugungseinheit 13 Strom erzeugt. Darüber hinaus fällt Abwärme an, die für Heizzwecke genutzt werden kann. Strom und Abwärme werden dezentral genutzt. Der Strom kann jedoch auch in das Stromnetz eingespeist werden. Im Falle eines Brenners wird von der Energieerzeugungseinheit 13 nur Wärme erzeugt.

Über eine Leitung 5 wird ungereinigtes Abgas abgeführt. Die Temperatur des Abgases beträgt 180 °C bis 500 °C. Dieses Abgas kann toxische Chrom(VI)-Verbindungen enthalten, welche von dem Filter 4 gefiltert werden. Der Filter 4 besteht aus einer ersten Filtereinheit 1, einer zweiten Filtereinheit 2 und einem Leerraum 3. Die erste Filtereinheit 1 enthält einen Filterkörper, der beispielsweise aus einem Metallgewebe, einem Metallschaum oder einem Keramikschaum besteht und einerseits eine große Oberfläche und andererseits eine geringe Strömungsgeschwindigkeit aufweist und damit eine lange Aufenthaltsdauer des Abgases in der ersten Filtereinheit bewirkt. Bevorzugt enthält die erste Filtereinheit 1 eine feste Säure wie beispielsweise Wolframoxid. Die hohe Temperatur der ersten Filtereinheit 1 sowie die Säure begünstigen eine Umwandlung der toxischen Chrom(VI)-Verbindungen in unkritische Chrom(III)-Verbindungen. Es erfolgt eine Reduktionsreaktion 4 CrO₃ → 2 Cr₂O₃ +3 O₂.

Daran anschließend weist der Filter 4 eine zweite Filtereinheit 2 auf, die ebenfalls einen Filterkörper mit großer Oberfläche enthält, welcher eine lange Verweildauer des Abgases in der zweiten Filtereinheit gewährleistet. In der zweiten Filtereinheit ist ein basisches Material wie Bariumoxid eingebracht. Es erfolgt eine Adsorption bzw. Fällung der Chrom(III)-Verbindungen in der zweiten Filtereinheit 2. Durch die Adsorption bzw. Fällung in der zweiten Filtereinheit 2 kann es zu einem Anwachsen einer Chromschicht in der zweiten Filtereinheit 2 kommen. Wenn die Schichtdicke eine kritische Schichtdicke überschritten hat, kommt es zu Chromoxidabplatzungen. Daher ist unter der zweiten Filtereinheit 2 ein Leerraum 3 vorgesehen, in den die Abplatzungen hinunter fallen können.

Die so von den Chrom-Verbindungen gereinigten Abgase werden dann durch einen Abgaswärmeübertrager 7 geführt, aus dem die Wärme des Abgases mittels einer Wärmeauskopplung abgeführt wird. Die Wärme kann beispielsweise für Heizzwecke verwendet werden. Anschließend wird das abgekühlte Abgas über eine Leitung 8 abgeführt. Das bei der Wärmeauskopplung entstehende Kondensat wird ebenfalls über eine Leitung 9 abgeführt werden.

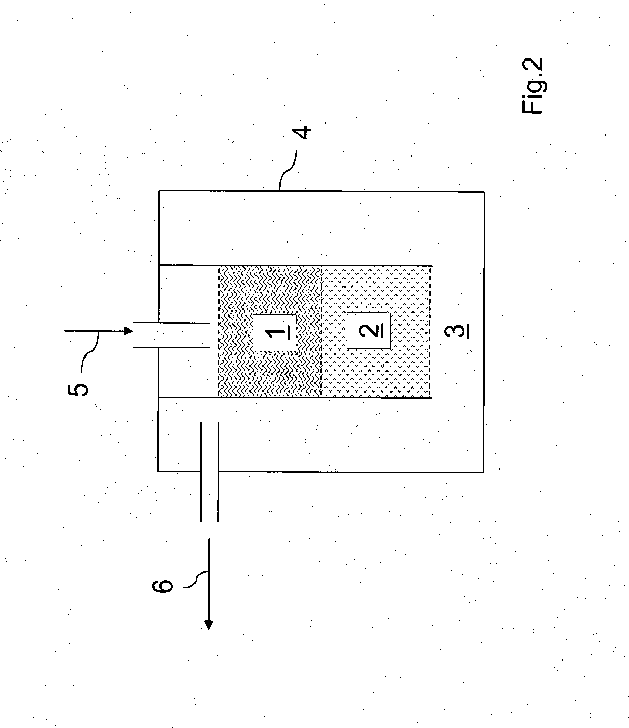

Figur 2 stellt im Detail eine Ausführungsvariante des erfindungsgemäßen Filters 4 dar.

Im Leerraum 3 wird die Abgasströmung entgegen der Schwerkraft umgelenkt, so dass Chrom(III)-Stäube und Abplatzungen nicht mehr mit der Gasströmung ausgetragen werden können.

### Bezugszeichenliste

- 1: Erste Filtereinheit
- 2: Zweite Filtereinheit
- 3: Leerraum
- 4: Filter
- 5: Leitung für ungereinigtes Abgas
- 6: Leitung für gereinigtes Abgas
- 7: Abgaswärmeübertrager
- 8: Leitung für abgekühltes Abgas
- 9: Leitung für Kondensat
- 10: Wärmeauskopplung
- 11: Luftzufuhr
- 12: Brennstoffzufuhr
- 13: Energieerzeugungseinheit

## Patentansprüche

1. System, umfassend eine Energieerzeugungseinheit (13) und ein Filter (4) zur Abtrennung von Chrom(VI)-Verbindungen aus Abgasen dieser Energieerzeugungseinheit (13), wobei der Filter im Abgasweg vorgesehen ist, **dadurch gekennzeichnet, dass** der Filter eine erste Filtereinheit mit einem sich im Strömungsweg des Abgases vorgesehenen ersten Filterkörper aus einem Metallgewebe, einem Metallschaum oder einem Keramikschaum umfasst, wobei die erste Filtereinheit so mit der Energieerzeugungseinheit verbunden ist, dass sich in der ersten Filtereinheit im Betrieb ein Temperatur von 180 °C bis 500 °C, bevorzugt 300 °C bis 500 °C einstellt, wobei die erste Filtereinheit die Chrom(VI)-Verbindungen in Chrom(III)-Verbindungen umwandelt.

2. Filter nach Anspruch 1, **dadurch gekennzeichnet, dass** der erste Filterkörper eine feste Säure enthält.

3. Filter nach Anspruch 2, **dadurch gekennzeichnet, dass** der erste Filterkörper aus einer Brönsted-Säure gebildet ist oder mit einer Brönsted-Säure beschichtet ist.

4. Filter nach Anspruch 2, **dadurch gekennzeichnet, dass** der erste Filterkörper aus einer Lewis-Säure gebildet ist oder mit einer Lewis-Säure beschichtet ist

5. Filter nach Anspruch 2, **dadurch gekennzeichnet, dass** der erste Filterkörper aus Wolframoxid gebildet ist oder mit Wolframoid beschichtet ist..

6. Filter nach Anspruch 5, **dadurch gekennzeichnet, dass** der erste Filterkörper aus mit Wolframoxid beschichteten Zirkonium oder Zirkoniumoxid besteht

7. Filter nach einem der vorhergehenden Ansprüche, **dadurch gekennzeichnet, dass** der Filter eine zweite Filtereinheit umfasst, die der ersten Filtereinheit im Abgasstrom nachgeschaltet ist, und dass die zweite Filtereinheit einen zweiten Filterkörper mit großer spezifischer Oberfläche aufweist, die mit festen Basen ausgestattet ist.

8. Filter nach Anspruch 7, **dadurch gekennzeichnet, dass** der zweite Filterkörper aus einem Metallgewebe, einem Metallschaum oder einem Keramikschaum besteht.

9. Filter nach Anspruch 7 oder 8, **dadurch gekennzeichnet, dass** als zweiter Filterkörper Aluminiumhexaaluminat verwendet wird.

10. Filter nach einem der Ansprüche 8 bis 9, **dadurch gekennzeichnet, dass** als feste Basen Bariumoxid oder eine Beschichtung mit Bariumoxid verwendet wird.

11. Filter nach einem der Ansprüche 1 bis 10, **dadurch gekennzeichnet, dass** ein Leerraum zur Aufnahme von Chromoxidabplatzungen unterhalb der zweiten Filtereinheit vorgesehen ist.

12. Filter nach Anspruch 11, **dadurch gekennzeichnet, dass** der Leerraum so gestaltet ist, dass die Gasströmung in Richtung der Schwerkraft oder senkrecht zur Schwerkraft gerichtet einströmt und im Leerraum entgegen Schwerkraft umgelenkt wird.

13. Filter nach einem der vorhergehenden Ansprüche, **dadurch gekennzeichnet, dass** die Energieerzeugungseinheit eine dezentral eingesetzte Brennstoffzelle, ein dezentral eingesetzter Brenner oder eine dezentral eingesetzte Verbrennungsmaschine.

14. Filter nach Anspruch 13, **dadurch gekennzeichnet, dass** die Energieerzeugungseinheit einen Abgaswärmeübertrager zur Nutzung der Abgaswärme aufweist und dass der Filter in Strömungsrichtung des Abgases vor dem Abgaswärmeübertrager angeordnet ist.

15. Verwendung eines Filters nach einem der Ansprüche 1 bis 14 in einer dezentral eingesetzten Energieerzeugungseinheit.

16. Verwendung eines Filters nach einem der Ansprüche 1 bis 14 in einem Brennstoffzellensystem.

## Claims

1. System comprising an energy generation unit (13) and a filter (4) for removing chromium (VI) compounds from exhaust gases of this energy generation unit (13), wherein the filter is provided in the exhaust gas path, **characterised in that** the filter comprises a first filter unit having a filter body made from a metal mesh, a metal foam or a ceramic foam, said filter body being provided in the flow path of the exhaust gas, wherein the first filter unit is connected to the energy generation unit in such a way that, during operation, a temperature of 180°C to 500°C, preferably 300°C to 500°C, is set in the first filter unit, wherein the first filter unit converts the chromium (VI) compounds into chromium (III) compounds.

2. Filter according to claim 1, **characterised in that** the first filter body contains a solid acid.

3. Filter according to claim 2, **characterised in that** the first filter body is formed from a Brönsted acid or is coated with a Brönsted acid.

4. Filter according to claim 2, **characterised in that** the first filter body is formed from a Lewis acid or is coated with a Lewis acid.

5. Filter according to claim 2, **characterised in that** the first filter body is formed from tungsten oxide or is coated with tungsten oxide.

6. Filter according to claim 5, **characterised in that** the first filter body consists of zirconium or zirconium oxide that is coated with tungsten oxide.

7. Filter according to one of the preceding claims, **characterised in that** the filter comprises a second filter unit which is arranged downstream of the first filter unit in the exhaust gas flow, and the second filter unit has a second filter body with a large specific surface that is equipped with solid bases.

8. Filter according to claim 7, **characterised in that** the second filter body consists of a metal mesh, a metal foam or a ceramic foam.

9. Filter according to claim 7 or 8, **characterised in that** aluminium hexaaluminate is used as the second filter body.

10. Filter according to one of claims 8 to 9, **characterised in that** barium oxide or a coating with barium oxide is used as solid bases.

11. Filter according to one of claims 1 to 10, **characterised in that** an empty space for receiving chromium oxide spalling is provided beneath the second filter unit.

12. Filter according to claim 12, **characterised in that** the empty space is designed in such a way that the gas flow flows directed in the direction of gravity or perpendicular to gravity and is redirected against gravity in the empty space.

13. Filter according to one of the preceding claims, **characterised in that** the energy generation unit is a decentrally-used fuel cell, a decentrally-used burner or a decentrally-used combustion engine.

14. Filter according to claim 13, **characterised in that** the energy generation unit has an exhaust gas heat exchanger for using the exhaust gas heat, and the filter is arranged in front of the exhaust gas heat exchanger in the flow direction of the exhaust gas.

15. Use of a filter according to one of claims 1 to 14 in a decentrally-used energy generation unit.

16. Use of a filter according to one of claims 1 to 14 in a fuel cell system.

## Revendications

1. Système, comprenant une unité de production d'énergie (13) et un filtre (4) destiné à séparer les liaisons chrome(VI) des gaz d'échappement de cette unité de production d'énergie (13), le filtre étant prévu dans le conduit de gaz d'échappement, **caractérisé en ce que** le filtre comprend une première unité de filtre avec un premier corps de filtre prévu dans le conduit d'écoulement du gaz d'échappement composé d'un tissu à mailles métalliques, d'une mousse métallique ou d'une mousse céramique, la première unité de filtre étant reliée à l'unité de production d'énergie, de sorte qu'une température comprise entre 180° C et 500° C, de préférence entre 300° C et 500° C, est réglée dans la première unité de filtre en fonctionnement, la première unité de filtre transformant les liaisons chrome(VI) en liaisons chrome(III).

2. Filtre selon la revendication 1, **caractérisé en ce que** le premier corps de filtre contient un acide solide.

3. Filtre selon la revendication 2, **caractérisé en ce que** le premier corps de filtre est composé d'acide de Brönsted ou recouvert d'acide de Brönsted.

4. Filtre selon la revendication 2, **caractérisé en ce que** le premier corps de filtre est composé d'acide de Lewis ou est recouvert d'acide de Lewis.

5. Filtre selon la revendication 2, **caractérisé en ce que** le premier corps de filtre est composé d'oxyde de tungstène ou est recouvert d'oxyde de tungstène.

6. Filtre selon la revendication 5, **caractérisé en ce que** le premier corps de filtre est composé de zirconium recouvert d'oxyde de tungstène ou est composé d'oxyde de zirconium.

7. Filtre selon l'une quelconque des revendications précédentes, **caractérisé en ce que** le filtre comprend une seconde unité de filtre, laquelle est connectée en aval à la première unité de filtre dans le flux de gaz d'échappement, et **en ce que** la seconde unité de filtre comporte un second corps de filtre avec une grande surface spécifique, laquelle est équipée de bases solides.

8. Filtre selon la revendication 7, **caractérisé en ce que** le second corps de filtre se compose de tissu à mailles métalliques, de mousse métallique ou de mousse céramique.

9. Filtre selon la revendication 7 ou 8, **caractérisé en ce que** de l'hexa-aluminate d'aluminium est utilisé comme second corps de filtre.

10. Filtre selon l'une quelconque des revendications 8 à 9, **caractérisé en ce que** de l'oxyde de baryum ou un revêtement avec de l'oxyde de baryum est utilisé comme bases solides.

11. Filtre selon l'une quelconque des revendications 1 à 10, **caractérisé en ce qu'**un espace vide est prévu pour recevoir des éclatements d'oxyde de chrome en-dessous de la seconde unité de filtre.

12. Filtre selon la revendication 12, **caractérisé en ce que** l'espace vide est conçu de sorte que l'écoulement de gaz s'écoule dans le sens de la force de gravité ou verticalement à elle et prend une direction opposée à la force de gravité dans l'espace vide.

13. Filtre selon l'une quelconque des revendications précédentes, **caractérisé en ce que** l'unité de production d'énergie est une cellule à combustible décentralisée, un brûleur décentralisé ou une machine à combustion décentralisée.

14. Filtre selon la revendication 13, **caractérisé en ce que** l'unité de production d'énergie présente un échangeur de chaleur de gaz d'échappement destiné à utiliser la chaleur des gaz d'échappement, et **en ce que** le filtre est disposé dans le sens de l'écoulement du gaz d'échappement devant l'échangeur de chaleur de gaz d'échappement.

15. Utilisation d'un filtre selon l'une quelconque des revendications 1 à 14 dans une unité de production d'énergie décentralisée.

16. Utilisation d'un filtre selon l'une quelconque des revendications 1 à 14 dans un système à cellules à combustion.
